# EUROPEAN PATENT SPECIFICATION

(11) **EP 3 518 714 B1**
(45) Date of publication and mention of the grant of the patent: **26.08.2020**
(21) Application number: 17772732.8
(22) Date of filing: 28.09.2017
(51) Int. Cl.: A47J 37/06, A47J 27/00

(54) **AUTONOMOUS APPARATUS FOR COOKING FOOD, AND CORRESPONDING METHOD**
AUTONOME VORRICHTUNG ZUM KOCHEN VON LEBENSMITTELN UND ZUGEHÖRIGES VERFAHREN
APPAREIL AUTONOME DE CUISSON D'ALIMENTS ET PROCÉDÉ CORRESPONDANT

(30) Priority: 28.09.2016 IT 201600097483
(43) Date of publication of application: 07.08.2019
(73) Proprietor: De' Longhi Appliances S.r.l. Con Unico Socio, 31100 Treviso (IT)
(72) Inventor: DE' LONGHI, Giuseppe, 31100 Treviso (IT); MAZZON, Renzo, 31057 Silea (IT); TREVISAN, Gianpaolo, 37036 San Martino Buon Albergo (IT)
(74) Representative: Petraz, Gilberto Luigi
(86) International application number: PCT/EP2017/074628
(87) International publication number: WO 2018/060331

(56) References cited:
- WO-A1-2015/081549
- US-A- 4 728 762
- US-A- 5 466 912
- US-B1- 6 274 847

## Description

### FIELD OF THE INVENTION

The present invention concerns an autonomous apparatus for cooking food comprising a support body, a lid of the openable type, and a container for the food that can be inserted into/removed from the support body and open at the top.

The apparatus also comprises at least one heating resistance and at least one rotor body, in order to send at least one stream of air inside the apparatus.

The present invention also concerns a method for cooking with at least one stream of air inside the apparatus.

### BACKGROUND OF THE INVENTION

In the domestic environment, autonomous apparatuses for cooking food are known, comprising a support body and an internal container, selectively extractable and open at the top.

The support body is provided with a closing lid to create inside it a cooking compartment with a controlled atmosphere suitable for the cooking that is to be carried out.

The controlled atmosphere is generated by at least one heating resistance, that is, a producer of heat energy, and a rotor body in order to send at least one stream of air to transfer heat energy to the container and, if necessary, to recover it.

It is known that the heating resistance is disposed above the internal container and that the rotor body is associated with it.

A critical aspect of the autonomous apparatuses in question concerns the recovery by the rotor body of the stream of air that has by now given up its heat to the food and that needs to pass through the heating resistance again for the start of a new cycle.

Known rotor bodies recover the stream of air limited to the central portion of the container by limiting the heat exchange between the stream of hot air and the food.

Moreover, if the stream of hot air is also located in the same central portion of the container, it happens that the two streams of hot air and recovery air are mixed, always causing a limitation on the heat exchange between the stream of air and the food.

It is also known that with the same apparatus it is possible to replace the container with one having a different configuration according to the cooking requirements.

However, the replacement of the container may result in a travel of the stream of air that is not consistent with the requirements.

Document WO-A-2015/081549 describes a cooking apparatus comprising a support body, a heating element, and a rotor body to generate a stream of air, disposed above and distanced from the heating element. This cooking apparatus also comprises a first container and a second container, disposed inside the first, wherein the food is disposed. The two containers can be removed laterally together from the support body US5466912 discloses an autonomous apparatus according to the preamble of claim 1.

The rotor body comprises a dividing wall and a rotor disposed inside the dividing wall, the perimeter edge of the dividing wall having the same or greater sizes than the first container and substantially matching with an edge of the first container when the lid is closed. In this way, the coldest stream of recovery air remains confined inside a compartment that defines the cooking chamber. Therefore, the stream of cold air is not heated when it enters the rotor but is heated when it meets the heating element, that is, when the stream of air is already close to the food.

Moreover, the disposition of the heating element, distanced from and below the rotor, and very close to the food contained inside the second container, means that the food is cooked only by irradiation, reducing the advantageous effects of a convective heat transmission.

The dividing wall of the rotor body is substantially communicating with the environment outside the cooking apparatus, which causes a greater dispersion of heat.

The dividing wall defines a single chamber in which the rotor and the heating element are installed.

This configuration does not allow to separate the lid and the compartment where there is the second container, which are therefore in heat connection with each other.

The cooking apparatus described above does not guarantee a homogeneous distribution of the stream of hot air.

US-A-5,466,912 describes a convection oven comprising a support body, a lid associated with the support body, a rotor body comprising a rotor and a dividing wall, and a heating element disposed separate from the rotor and outside the dividing wall of the rotor body.

The solution shown in US'912 also comprises a container open at the top and fixedly disposed inside the support body. The assembly configuration of the fixed container that is open at the top and the support body does not guarantee a homogeneous distribution of a stream of heated air for different types of food containers.

The dividing wall is defined by an upper chamber, in which the heating element is disposed, and by a lower chamber in which the rotor is disposed.

This configuration does not allow to separate the lid and the compartment where there is the fixed container, which are therefore in heat connection with each other.

Moreover, the oven described in US'912 does not provide any resistance disposed below the container.

One purpose of the present invention is to obtain an autonomous apparatus for cooking food that improves the heat exchange between the stream of air and the food.

Another purpose of the present invention is to obtain an apparatus that keeps the recovery of the stream of air coherent even with different containers.

It is another purpose of the present invention to obtain a stream of air which is better for a specific type of cooking on each occasion.

Another purpose of the present invention is to obtain a compact and easy-to-use apparatus.

Another purpose of the present invention is to obtain an apparatus that allows energy saving.

Another purpose is to perfect a method that allows to manage the stream of air to obtain improved heat exchange between the stream of air and the food depending on the type of cooking.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns an autonomous apparatus for cooking food comprising a support body with a first fixed container, and associated with a lid of the openable type.

According to an aspect of the present invention, the autonomous apparatus comprises a second container that is at least partly replaceable and/or removable, open at the top and disposed, during use, inside the first fixed container, wherein the second replaceable container is selectively interchangeable between at least a second container of a first type and a second container of a second type, at least a heating resistance located above the at least partly replaceable second container and associated in a substantially and at least partly coplanar manner, with a rotor of a rotor body, wherein the rotor is configured to at least send a stream of hot air directly toward a bottom wall of the at least partly replaceable second container.

By the term "substantially coplanar" we mean that the resistance and the rotor have at least a common lying plane, in relation to their different thicknesses.

By the term "at least partly" replaceable or removable we mean that the second container can be removed and replaced in its entirety by another container of a different type, or only a part of it can be removed or replaced, for example the bottom of part of it.

According to another aspect of the present invention, the rotor body is also configured to at least partly recover a stream of recovery air between one edge of the at least partly replaceable second container and an external lateral periphery of the rotor body through a recovery channel. In particular, the edge of the at least partly replaceable second container and the external lateral periphery of the rotor body together define the recovery channel through which the air, cooled after having heated the food, is recovered to be once again heated by the heating resistance, and then sent again toward the second container by the movement of the rotor in a substantially and partly instantaneous manner with respect to the heating.

According to another aspect of the present invention, the external lateral periphery of the rotor body is smaller than the perimeter edge of the second container.

Thanks to the reciprocal disposition of the resistance and rotor, and thanks to the size ratio between the rotor body and containers, the cooking apparatus according to the present invention promotes a transmission of heat of the convective type, thus allowing a uniform distribution of the heat for an optimal cooking of the food even with second containers having different configurations.

It is within the spirit of the invention to provide that with a single model of the at least partly replaceable second container, several types of cooking can be achieved by simply replacing the type of replaceable container, or replacing the bottom of the container.

According to a variant aspect, the second container of the first type has a closed bottom, while the second container of the second type has a holed bottom.

According to another aspect, the recovery channel is integrated with a second stream of recovery air defined between an external edge of the at least partly replaceable second container of the second type, and an edge of the first fixed container of the support body.

According to another embodiment of the present invention, the rotor body is provided with a plurality of recovery mouths cooperating with the recovery channel.

The recovery mouths are advantageously located substantially in an upper portion of the external lateral periphery of the rotor body and cooperating with the area around the axis of the rotor.

According to the idea of the invention, it is therefore possible that, depending on the type of cooking desired, since the type of cooking is associated with the at least partly replaceable second container of the first type, the hot air directly reaches the food and performs its function inside the at least partly replaceable container.

According to a variant, the action of the hot air can be integrated with another source of heat, that is, a lower resistance, advantageously an electric resistance, located below the at least partly replaceable second container.

According to the variant, if there is the at least partly replaceable second container of the second type, that is, with a holed bottom, the hot air partly performs its function directly on the food and partly by passing through the food itself. In this case too, a variant is provided using another heat supply by means of the lower resistance located below the at least partly replaceable second container.

According to another variant, the lower resistance can also involve at least part of the wall of the at least partly replaceable second container, or even only the lateral wall.

It is therefore within the spirit of the invention that the at least partly replaceable second container of the first type has only its upper opening open, while the at least partly replaceable second container of the second type also has its bottom holed on each occasion depending on the particular needs of the cooking required. In other words, the at least partly replaceable container of the second type, according to the invention, can have differentiated holed bottoms.

It is also within the spirit of the invention to provide possible detection and recognition means which detect the presence of the at least partly replaceable second container of the first or the second type, recognizing which of the two is installed in that moment, possibly prohibiting one or more cooking functions.

The present invention also concerns a method for cooking food with at least a stream of air using the autonomous cooking apparatus.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of a cooking apparatus in an operating condition;
- fig. 2 is a section view of the cooking apparatus in fig. 1;
- fig. 3 is another section view of the cooking apparatus in fig. 1;
- fig. 4 is a perspective view of the cooking apparatus in another operating condition;
- fig. 5 is a section view of the cooking apparatus in fig. 4;
- fig. 6 is another section view of the cooking apparatus in fig. 4.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

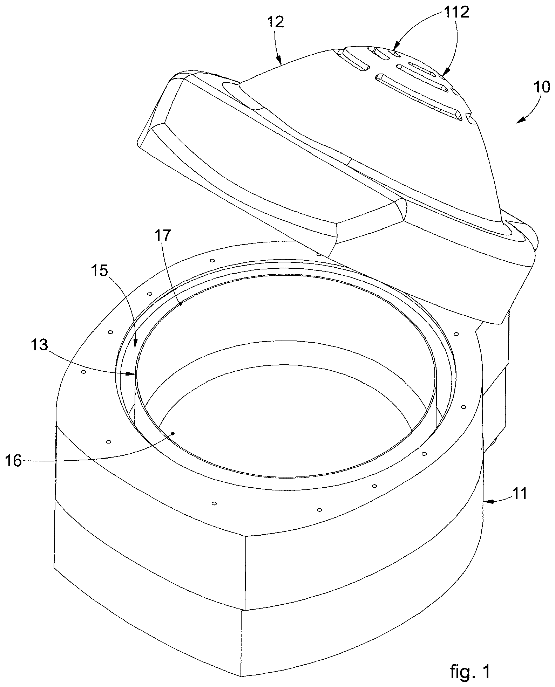

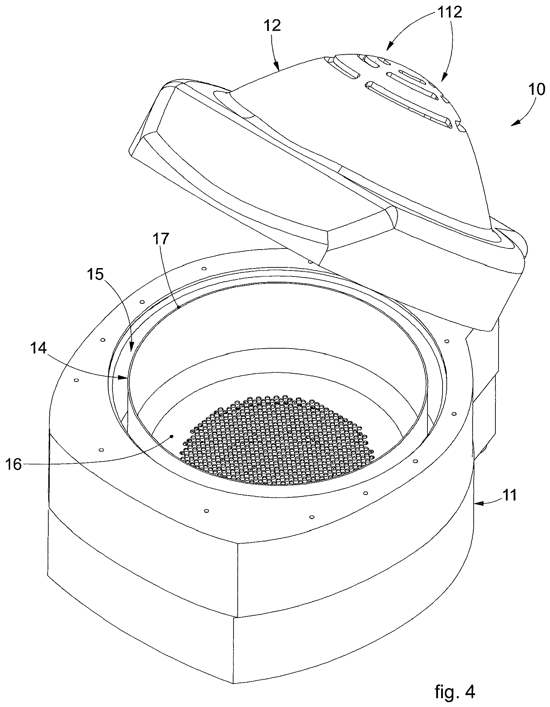

With reference to figs. 1 to 6 we will now describe possible embodiments of the present invention of an apparatus 10 for cooking food in various ways, for example for frying, roasting, browning or for simple heating, sauteing, slow cooking, or quick cooking in general.

By way of example, the apparatus 10 comprises a support body 11 associated with a openable lid 12, a second at least partly replaceable container 13, 14, and a first fixed container 21, suitable to contain the second container 13, 14 on each occasion.

The second container is selectively interchangeable between an at least partly replaceable container 13 of a first type and an at least partly replaceable container 14 of a second type, said second containers 13 and 14 both being open at the top and the second container of the first type 13 having its bottom 16 closed and the second container of the second type 14 having its bottom 16 at least partly holed.

It should be noted that the second container of the first type 13 and the second container of the second type 14 can be completely replaceable, or, alternatively, they can be configured by the same container having at least the bottom 16 that can be replaced according to requirements.

For example, the bottom 16 in a first configuration can be continuous to define the second container of the first type 13 and in a second configuration it can have a plurality of holes or a metal net having suitably sized meshes, to define the second container of the second type 14.

The second container of the first type 13 and the second container of the second type 14 can also be configured to allow the association of one or more interchangeable handles and/or grips, to allow to handle the second container 13, 14.

For example, each handle and/or grip can cooperate with an edge 17 of the second container 13, 14 and be mobile to selectively assume at least two stable positions.

Moreover, the handle and/or grip can be configured to cooperate with the lid 12 when it is in the closed position, obtaining a same-shape coupling with the latter.

The second at least partly replaceable containers 13, 14, when in place, rest either on the bottom of the first fixed container 21 or, at least in the case of the second container of the second type 14, on means that create a channel for a stream of air to transit, said means being present in the first fixed container 21, or on the bottom of the second container of the second type 14.

The distances between the first fixed container 21, the bottom 16 and the walls of the second container of the first type 13 or of the second container of the second type 14 can be variable depending on the containment requirements and the type of cooking.

There can be a lower resistance 22 below the second container 13 and/or 14.

The lower resistance 22 can also affect at least a portion of the lateral wall of one and/or the other of the second container 13, 14.

In the case of the second container of the second type 14 with the bottom 16 at least partly holed, the lower resistance 22 cooperates with it to heat also a second stream of recovery air 29.

In the case shown here by way of example, in the lid 12 there are two compartments separated by a dividing wall 19, of which an upper compartment 31 in which there is a drive member 20 which is cooled by a cooling air circuit 18 by the entry and expulsion of air from a coordinated plurality of ventilation holes 112.

The drive member 20 can have, in axis with it, a possible fan to improve the cooling stream of air of the drive member 20.

A second compartment 32, in this case below the first, cooperates with the inside of the apparatus 10 and comprises inside it a rotor body 23 driven by the drive member 20.

The rotor body 23 comprises a rotor 24 and is disposed above the second container 13, 14.

The rotor body 23 has a dividing wall 26 having a central hole or a plurality of apertures that surround the shaft of the drive member 20 which drives the rotor 24, leaving space for the transit of a stream of recovery air 28.

The rotor body 23 receives the stream of recovery air 28 which supplies the rotor 24 after passing through a plurality of recovery mouths 25 and the second dividing wall 26.

Furthermore, the rotor body 23 has an external lateral periphery 23a having a smaller size than the edge 17 of the second container 13, 14.

According to a preferred embodiment, the dividing wall 26 can define an upper chamber 33 to recover the air, and a lower chamber 34.

The upper chamber 33 can have the plurality of recovery mouths 25.

The upper chamber 33 is configured to receive the stream of recovery air 28 entering through the plurality of recovery mouths 25.

In this way, the stream of recovery air 28, having a lower temperature than the stream of air 30 exiting from the rotor 24, allows to generate a thermal gradient between the second compartment 32 and the upper compartment 31, since the latter must have lower temperatures to ensure temperatures suitable for the functioning of the drive member 20 and to prevent overheating.

In addition to the rotor 24, the rotor body 23 also comprises inside it a heating resistance 27 that surrounds the rotor 24.

In particular, the rotor 24 and the heating resistance 27 are housed in the lower chamber 34.

The stream of recovery air 28 flows from the upper chamber 33 to the lower chamber 34 in which it is heated by the heating resistance 27.

Consequently, the rotor 24 sends the hot stream of air 30 toward the second container 13, 14 to generate a convective heat exchange between the stream of air 30 and the food.

According to one embodiment, the heating resistance 27 can be disposed below the rotor 24, that is, distanced from the rotor 24 with respect to the direction of its axis of rotation.

The rotor body 23 in this case has a substantially circular development and has centrally the second compartment 32 for the stream of air 30 to exit.

The second compartment 32 can be totally open, that is, have preferential apertures able to better direct the stream of air 30 inside the second container 13 or 14.

The possible apertures can be fixed, or also at least partly directed, possibly by means of a command.

In the case of the second container of the first type 13, the stream of air 30 enters the second container of the first type 13 and exits as the stream of recovery air 28 into the interspace between the internal edge 17 of the second container of the first type 13 and the external lateral periphery 23a of the rotor 23.

If the second container of the second type 14 is present, with its at least partly holed bottom 16, in addition to the recovery channel present as for the second container of the first type 13, there is also a second recovery channel defined by the external edge 17 of the second container of the second type 14 and the edge of the first fixed container 21.

If the second container of the first type 13 is present, the lower resistance 22 possibly cooperates with the stream of air 30 for cooking the food.

If the second container of the second type 14 is present, the lower resistance 22 can cooperate with the bottom 16 of the second container of the second type 14 for cooking, and can also cooperate with the second stream of air recovery 29 in order to heat it.

According to a variant embodiment, the second container of the second type 14 can have, or also have, transit holes for the stream of air 30 in correspondence with the connecting edge between the vertical wall and the bottom 16.

According to another variant embodiment, the second container of the second type 14 can have, or also have, holes in the lower part of the vertical wall.

The apparatus 10 advantageously comprises detection means that detect the presence of one or the other second container 13, 14.

The detection means condition a control and command unit (not shown), preventing types of cooking that are not compatible with the model and type of the at least partly replaceable container 13 or 14 present.

We will now describe an example of a possible method for circulating a stream of air 28, 29, 30 using the apparatus 10.

The rotor body 23 generates the stream of air 30 heated by the heating resistance 27 and having a downward direction, directed at least toward the bottom 16.

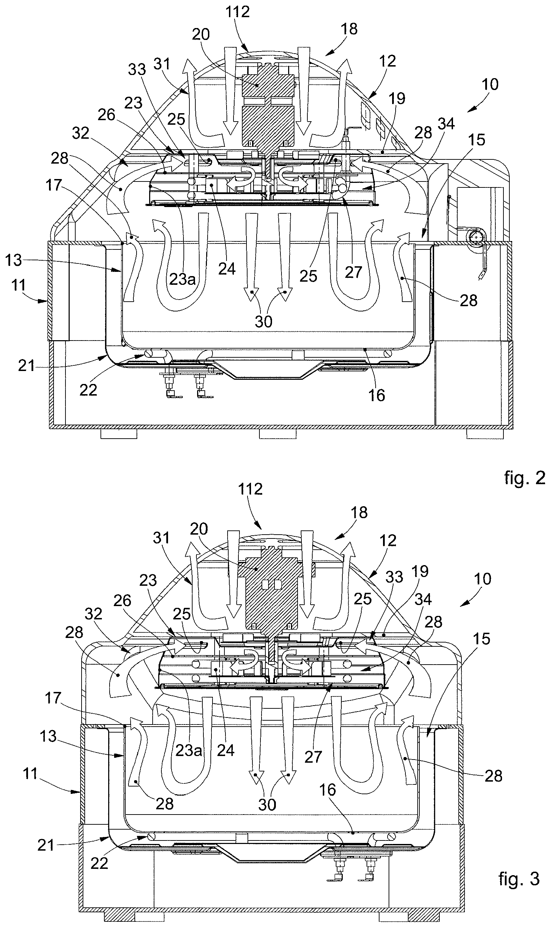

In the embodiment that provides the second container of the first type 13 and with reference to figs. 2 and 3, the stream of air 30 hits the food from above and possibly laterally if the stream of air 30 also cooperates with the lateral wall of the second container of the first type 13 itself.

The stream of recovery air 28 is channeled against the internal edge 17 of the second container of the first type 13 and continues towards the recovery mouths 25 through the recovery channel.

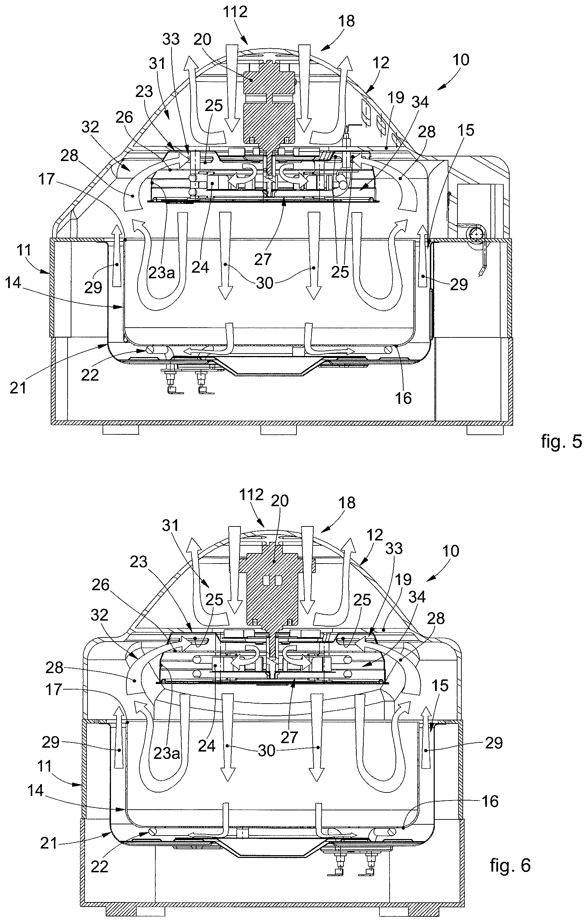

In the embodiment that provides the second container of the second type 14 and with reference to figs. 5 and 6, part of the stream of air 30 passes through the food, giving up heat to it, and becomes a second stream of recovery air 29 which is channeled into the second recovery channel.

According to one embodiment, in the presence of the lower resistance 22, the second stream of recovery air 29 can be heated. Therefore, the second stream of recovery air 29 is heated by the lower resistance 22 for further heating of the walls of the second container 14.

In this way, it is possible to guarantee a lateral recovery of the stream of recovery air 28 that passes through the recovery channel irrespective of the type of second container 13, 14 installed in the apparatus 10.

It is clear that modifications and/or additions of parts may be made to the apparatus 10 and corresponding method as described heretofore, without departing from the field and scope of the present invention.

It is also clear that, although the present invention has been described with reference to some specific examples, a person of skill in the art shall certainly be able to achieve many other equivalent forms of apparatus 10 and corresponding method, having the characteristics as set forth in the claims and hence all coming within the field of protection defined thereby.

## Claims

1. Autonomous apparatus for cooking food comprising a support body (11) with a fixed container (21), said support body (11) being associated with a lid (12) of the openable type, wherein the apparatus further comprises a second container contained in said first fixed container (21), wherein said second container is at least partly replaceable and selectively interchangeable between at least a second container of a first type (13) at least partly replaceable, open at the top and with a closed bottom (16), and a second container of a second type (14) at least partly replaceable, open at the top and with an at least partly holed bottom (16), the apparatus further comprising at least a heating resistance (27) located above said at least partly replaceable second container (13, 14) and associated in a substantially and at least partly coplanar manner, with a rotor body (23) comprising a rotor (24), said rotor body (23) being configured to at least send a stream of air (30) directly toward the bottom (16) of the at least partly replaceable second container (13, 14), wherein said rotor body (23) is also configured to at least partly recover a stream of recovery air (28) between one edge (17) of said at least partly replaceable second container (13, 14) and the external lateral periphery (23a) of said rotor body (23), said edge (17) and said external lateral periphery (23a) together defining between them a recovery channel for said stream of recovery air (28), wherein said external lateral periphery (23a) of said rotor body (23) is smaller than said edge (17) of said second container (13, 14), wherein said rotor body (23) has a lower exit aperture directly facing the upper aperture of said at least partly replaceable second container (13, 14) and a plurality of recovery mouths (25) to recover the stream of recovery air (28) cooperating with around the axis of said rotor (24), **characterized in that** said rotor body (23) comprises a dividing wall (26) defining an upper chamber (33) to recover the air and a lower chamber (34), wherein said upper chamber (33) has said plurality of recovery mouths (25) and is configured to receive said stream of recovery air (28) entering through said plurality of recovery mouths (25) and said lower chamber (34) is configured to house at least said rotor (24) and said heating resistance (27).

2. Apparatus as in claim 1, **characterized in that** it comprises a second recovery channel, associated with said at least partly replaceable second container of the second type (14), defined between an external edge (17) of said at least partly replaceable second container of the second type (14) and an edge of said fixed container (21), said second recovery channel cooperating at least with the interspace between the bottom (16) of the second at least partly replaceable container of the second type (14) and the bottom of said fixed container (21).

3. Apparatus as in claim 1 or 2, **characterized in that** it comprises a lower resistance (22) present in correspondence with at least the bottom of said fixed container (21), said lower resistance (22) cooperating with the bottom (16) of the at least partly replaceable second container (13, 14), said lower resistance (22) being active or not on each occasion, depending on the type of cooking.

4. Apparatus as in any claim hereinbefore, **characterized in that** it comprises detection and recognition means configured to detect the type of at least partly replaceable second container (13, 14).

5. Apparatus as in claim 4, **characterized in that** it comprises a command and control unit to define the type of cooking, configured to be conditioned by said detection means.

6. Method for cooking with at least a stream of air generated inside an autonomous apparatus (10) as in claim 1 for cooking food comprising a support body (11) with a first fixed container (21), said support body (11) being associated with a lid (12) of the openable type, said first fixed container (21) being configured to contain a second container that is at least partly replaceable and selectively interchangeable between at least a second container of a first type (13) at least partly replaceable, open at the top and with a closed bottom (16), and a second container of a second type (14) at least partly replaceable and open at the top and with an at least partly holed bottom (16), at least a heating resistance (27) located above said at least partly replaceable second container (13, 14) and associated in a substantially and at least partly coplanar manner with a rotor body (23) comprising a rotor (24), said rotor body (23) being configured to at least send a stream of air (30) axially to said apparatus (10), wherein the method provides to:
- send said stream of air (30) directly toward the bottom (16) of the at least partly replaceable second container (13, 14) by means of said rotor body (23);
- at least partly recover a stream of recovery air (28) between one edge (17) of said at least partly replaceable second container (13, 14) and an external lateral periphery (23a) of said rotor body (23), said edge (17) and said external lateral periphery (23a) together defining between them a recovery channel for said stream of recovery air (28), wherein said external lateral periphery (23a) of said rotor body (23) is smaller than said edge (17) of said second container (13, 14).

7. Method as in claim 6, **characterized in that** it provides to send said stream of air (30) through a lower exit aperture of said rotor body (23) directly facing the upper aperture of said at least partly replaceable second container (13, 14) and to recover at least said stream of recovery air (28) through a plurality of recovery mouths (25) made in said rotor body (23).

8. Method as in claim 6 or 7, **characterized in that** a second stream of recovery air (29) is generated at least from the bottom (16) of said second at least partly replaceable second container of the second type (14) and is diverted into a second recovery channel defined between an external edge (17) of said at least partly replaceable second container of the second type (14) and an edge of said first fixed container (21).

9. Method as in any claim from 6 to 8, **characterized in that** a lower resistance (22) is activated or not, depending on the type of cooking, and cooperates with the bottom (16) of the at least partly replaceable second container (13, 14).

10. Method as in any claim from 6 to 9, **characterized in that** it provides to detect the type of at least partly replaceable second container (13, 14) by means of detection means, and to condition the type of cooking through said detection means.

## Patentansprüche

1. Autonome Vorrichtung zum Kochen von Lebensmitteln, umfassend einen Stützkörper (11) mit einem fixierten Behälter (21), wobei der Stützkörper (11) mit einem Deckel (12) verbunden ist, der geöffnet werden kann, wobei die Vorrichtung außerdem einen zweiten Behälter umfasst, der in dem ersten fixierten Behälter (21) enthalten ist, wobei der zweite Behälter zumindest teilweise herausnehmbar und zwischen mindestens einem zweiten Behälter eines ersten Typs (13), der zumindest teilweise herausnehmbar, nach oben offen und mit einem geschlossenen Boden (16) versehen ist, und einem zweiten Behälter eines zweiten Typs (14), der zumindest teilweise herausnehmbar, nach oben offen und mit einem zumindest teilweise gelochten Boden (16) versehen ist, selektiv austauschbar ist, wobei die Vorrichtung außerdem mindestens einen Heizwiderstand (27) umfasst, der über dem zumindest teilweise herausnehmbaren zweiten Behälter (13, 14) angeordnet und im Wesentlichen und zumindest teilweise komplanar mit einem einen Rotor (24) umfassenden Rotorgehäuse (23) verbunden ist, wobei das Rotorgehäuse (23) so konfiguriert ist, dass es zumindest einen Luftstrom (30) direkt in Richtung Boden (16) des zumindest teilweise herausnehmbaren zweiten Behälters (13, 14) aussendet, wobei das Rotorgehäuse (23) außerdem so konfiguriert ist, dass es einen Rückgewinnungsluftstrom (28) zwischen einer Kante (17) des zumindest teilweise herausnehmbaren zweiten Behälters (13, 14) und der äußeren seitlichen Peripherie (23a) des Rotorgehäuses (23) zumindest teilweise rückgewinnt, wobei die Kante (17) und die äußere seitliche Peripherie (23a) gemeinsam einen Rückgewinnungskanal für den Rückgewinnungsluftstrom (28) zwischen sich definieren, wobei die äußere seitliche Peripherie (23a) des Rotorgehäuses (23) kleiner ist als die Kante (17) des zweiten Behälters (13, 14), wobei das Rotorgehäuse (23) eine untere Ausgangsöffnung, die der oberen Öffnung des zumindest teilweise herausnehmbaren zweiten Behälters (13, 14) direkt gegenüberliegt, und eine Vielzahl an Rückgewinnungsöffnungen (25) zur Rückgewinnung des Rückgewinnungsluftstroms (28), welche mit dem Bereich um die Achse des Rotors (24) herum kooperieren, aufweist, **dadurch gekennzeichnet, dass** das Rotorgehäuse (23) eine Trennwand (26) umfasst, die eine obere Kammer (33) zur Rückgewinnung der Luft und eine untere Kammer (34) definiert, wobei die obere Kammer (33) die Vielzahl an Rückgewinnungsöffnungen (25) aufweist und so konfiguriert ist, dass sie den Rückgewinnungsluftstrom (28), der durch die Vielzahl an Rückgewinnungsöffnungen (25) eintritt, aufnimmt, und die untere Kammer (34) so konfiguriert ist, dass sie zumindest den Rotor (24) und den Heizwiderstand (27) beherbergt.

2. Vorrichtung gemäß Anspruch 1, **dadurch gekennzeichnet, dass** sie einen zweiten Rückgewinnungskanal umfasst, der mit dem zumindest teilweise herausnehmbaren zweiten Behälter des zweiten Typs (14) verbunden ist und zwischen einer Außenkante (17) des zumindest teilweise herausnehmbaren zweiten Behälters des zweiten Typs (14) und einer Kante des fixierten Behälters (21) definiert wird, wobei der zweite Rückgewinnungskanal zumindest mit dem Zwischenraum zwischen dem Boden (16) des zweiten zumindest teilweise herausnehmbaren Behälters des zweiten Typs (14) und dem Boden des fixierten Behälters (21) kooperiert.

3. Vorrichtung gemäß Anspruch 1 oder 2, **dadurch gekennzeichnet, dass** sie einen unteren Widerstand (22) umfasst, der in Übereinstimmung mit zumindest dem Boden des fixierten Behälters (21) vorliegt, wobei der untere Widerstand (22) mit dem Boden (16) des zumindest teilweise herausnehmbaren zweiten Behälters (13, 14) kooperiert, wobei der untere Widerstand (22) je nach Kochtyp aktiv ist oder nicht.

4. Vorrichtung gemäß irgendeinem vorhergehenden Anspruch, **dadurch gekennzeichnet, dass** sie Detektions- und Erkennungsmittel umfasst, die so konfiguriert sind, dass sie den Typ des zumindest teilweise herausnehmbaren zweiten Behälters (13, 14) detektieren.

5. Vorrichtung gemäß Anspruch 4, **dadurch gekennzeichnet, dass** sie eine Befehls- und Steuerungseinheit umfasst, um den Kochtyp zu definieren, die so konfiguriert ist, dass sie durch das Detektionsmittel konditioniert wird.

6. Kochverfahren mit mindestens einem Luftstrom, der im Inneren einer autonomen Vorrichtung (10) zum Kochen von Lebensmitteln gemäß Anspruch 1 erzeugt wird, wobei die Vorrichtung einen Stützkörper (11) mit einem fixierten Behälter (21) umfasst, wobei der Stützkörper (11) mit einem Deckel (12) verbunden ist, der geöffnet werden kann, wobei der erste fixierte Behälter (21) so konfiguriert ist, dass er einen zweiten Behälter enthält, der zumindest teilweise herausnehmbar und zwischen mindestens einem zweiten Behälter eines ersten Typs (13), der zumindest teilweise herausnehmbar, nach oben offen und mit einem geschlossenen Boden (16) versehen ist, und einem zweiten Behälter eines zweiten Typs (14), der zumindest teilweise herausnehmbar, nach oben offen und mit einem zumindest teilweise gelochten Boden (16) versehen ist, selektiv austauschbar ist, wobei die Vorrichtung mindestens einen Heizwiderstand (27) umfasst, der über dem zumindest teilweise herausnehmbaren zweiten Behälter (13, 14) angeordnet und im Wesentlichen und zumindest teilweise komplanar mit einem einen Rotor (24) umfassenden Rotorgehäuse (23) verbunden ist, wobei das Rotorgehäuse (23) so konfiguriert ist, dass es zumindest einen Luftstrom (30) axial zu der Vorrichtung (10) aussendet, wobei das Verfahren bereitstellt:
- Aussenden des Luftstroms (30) direkt in Richtung Boden (16) des zumindest teilweise herausnehmbaren zweiten Behälters (13, 14) durch das Rotorgehäuse (23);
- zumindest teilweises Rückgewinnen eines Rückgewinnungsluftstroms (28) zwischen einer Kante (17) des zumindest teilweise herausnehmbaren zweiten Behälters (13, 14) und einer äußeren seitlichen Peripherie (23a) des Rotorgehäuses (23), wobei die Kante (17) und die äußere seitliche Peripherie (23a) gemeinsam einen Rückgewinnungskanal für den Rückgewinnungsluftstrom (28) zwischen sich definieren, wobei die äußere seitliche Peripherie (23a) des Rotorgehäuses (23) kleiner ist als die Kante (17) des zweiten Behälters (13, 14).

7. Verfahren gemäß Anspruch 6, **dadurch gekennzeichnet, dass** es das Aussenden des Luftstroms (30) durch eine untere Ausgangsöffnung des Rotorgehäuses (23), die direkt der oberen Öffnung des zumindest teilweise herausnehmbaren zweiten Behälters (13, 14) gegenüberliegt, und das Rückgewinnen zumindest des Rückgewinnungsluftstroms (28) durch eine Vielzahl an in dem Rotorgehäuse (23) ausgebildeten Rückgewinnungsöffnungen (25) bereitstellt.

8. Verfahren gemäß Anspruch 6 oder 7, **dadurch gekennzeichnet, dass** ein zweiter Rückgewinnungsluftstrom (29) zumindest vom Boden (16) des zumindest teilweise herausnehmbaren zweiten Behälters des zweiten Typs (14) aus erzeugt wird und in einen zweiten Rückgewinnungskanal, der zwischen einer Außenkante (17) des zumindest teilweise herausnehmbaren zweiten Behälters vom zweiten Typ (14) und einer Kante des ersten fixierten Behälters (21) definiert wird, abgeleitet wird.

9. Verfahren gemäß irgendeinem der Ansprüche 6 bis 8, **dadurch gekennzeichnet, dass,** in Abhängigkeit von dem Kochtyp, ein unterer Widerstand (22) aktiviert wird oder nicht aktiviert wird und mit dem Boden (16) des zumindest teilweise herausnehmbaren zweiten Behälters (13, 14) kooperiert.

10. Verfahren gemäß irgendeinem der Ansprüche 6 bis 9, **dadurch gekennzeichnet, dass** es das Detektieren des Typs des zumindest teilweise herausnehmbaren zweiten Behälters (13, 14) durch Detektionsmittel und das Konditionieren des Kochtyps durch das Detektionsmittel bereitstellt.

## Revendications

1. Appareil autonome pour cuire des aliments comprenant un corps de support (11) avec un récipient fixe (21), ledit corps de support (11) étant associé à un couvercle (12) du type ouvrable, où l'appareil comprend en outre un second récipient contenu dans ledit premier récipient fixe (21), où ledit second récipient est au moins partiellement remplaçable et sélectivement interchangeable entre au moins un second récipient d'un premier type (13) au moins partiellement remplaçable, ouvert vers le haut et avec un fond (16) fermé, et un second récipient d'un second type (14) au moins partiellement remplaçable, ouvert vers le haut et avec un fond (16) au moins partiellement percé, l'appareil comprenant en outre au moins une résistance chauffante (27) située au-dessus dudit second récipient au moins partiellement remplaçable (13, 14) et associée de manière sensiblement et au moins partiellement coplanaire, à un corps de rotor (23) comprenant un rotor (24), ledit corps de rotor (23) étant configuré pour au moins envoyer un flux d'air (30) directement vers le fond (16) du second récipient au moins partiellement remplaçable (13, 14), où ledit corps de rotor (23) est également configuré pour récupérer au moins partiellement un flux d'air de récupération (28) entre un bord (17) dudit second récipient au moins partiellement remplaçable (13, 14) et la périphérie latérale externe (23a) dudit corps de rotor (23), ledit bord (17) et ladite périphérie latérale externe (23a) définissant ensemble entre eux un canal de récupération pour ledit flux d'air de récupération (28), où ladite périphérie latérale externe (23a) dudit corps de rotor (23) est inférieur audit bord (17) dudit second récipient (13, 14), où ledit corps de rotor (23) a une ouverture de sortie inférieure directement en regard de l'ouverture supérieure dudit second récipient (13, 14) au moins partiellement remplaçable et une pluralité d'embouchures de récupération (25) pour récupérer le flux d'air de récupération (28) coopérant avec autour de l'axe dudit rotor (24), **caractérisé en ce que** ledit corps de rotor (23) comprend une paroi de séparation (26) définissant une chambre supérieure (33) pour récupérer l'air et une chambre inférieure (34), où ladite chambre supérieure (33) a ladite pluralité d'embouchures de récupération (25) et est configurée pour recevoir ledit flux d'air de récupération (28) entrant à travers ladite pluralité d'embouchures de récupération (25) et ladite chambre inférieure (34) est configurée pour loger au moins ledit rotor (24) et ladite résistance chauffante (27).

2. Appareil selon la revendication 1, **caractérisé en ce qu'**il comprend un second canal de récupération, associé audit second récipient au moins partiellement remplaçable du second type (14), défini entre un bord externe (17) dudit second récipient au moins partiellement remplaçable du second type (14) et un bord dudit récipient fixe (21), ledit second canal de récupération coopérant au moins avec l'espace intermédiaire entre le fond (16) du second récipient au moins partiellement remplaçable du second type (14) et le fond dudit récipient fixe (21).

3. Appareil selon la revendication 1 ou 2, **caractérisé en ce qu'**il comprend une résistance inférieure (22) présente en correspondance avec au moins le fond dudit récipient fixe (21), ladite résistance inférieure (22) coopérant avec le fond (16) du second récipient au moins partiellement remplaçable (13, 14), ladite résistance inférieure (22) étant active ou non à chaque fois, selon le type de cuisson.

4. Appareil selon l'une quelconque des revendications précédentes, **caractérisé en ce qu'**il comprend des moyens de détection et de reconnaissance configurés pour détecter le type de second récipient (13, 14) au moins partiellement remplaçable.

5. Appareil selon la revendication 4, **caractérisé en ce qu'**il comprend une unité de commande et de contrôle pour définir le type de cuisson, configurée pour être conditionnée par lesdits moyens de détection.

6. Procédé de cuisson avec au moins un flux d'air généré à l'intérieur d'un appareil autonome (10) selon la revendication 1 pour cuire des aliments comprenant un corps de support (11) avec un premier récipient fixe (21), ledit corps de support (11) étant associé à un couvercle (12) du type ouvrable, ledit premier récipient fixe (21) étant configuré pour contenir un second récipient qui est au moins partiellement remplaçable et sélectivement interchangeable entre au moins un second récipient d'un premier type (13) au moins partiellement remplaçable, ouvert vers le haut et avec un fond (16) fermé, et un second récipient d'un second type (14) au moins partiellement remplaçable et ouvert vers le haut et avec un fond (16) au moins partiellement percé, au moins une résistance chauffante (27) située au-dessus dudit second récipient (13, 14) au moins partiellement remplaçable et associée de manière sensiblement et au moins partiellement coplanaire à un corps de rotor (23) comprenant un rotor (24), ledit corps de rotor (23) étant configuré pour au moins envoyer un flux d'air (30) axialement audit appareil (10), où le procédé consiste à :
- envoyer ledit flux d'air (30) directement vers le fond (16) du second récipient (13, 14) au moins partiellement remplaçable au moyen dudit corps de rotor (23) ;
- récupérer au moins partiellement un flux d'air de récupération (28) entre un bord (17) dudit second récipient (13, 14) au moins partiellement remplaçable et une périphérie latérale externe (23a) dudit corps de rotor (23), ledit bord (17) et ladite périphérie latérale externe (23a) définissant ensemble entre eux un canal de récupération pour ledit flux d'air de récupération (28), où ladite périphérie latérale externe (23a) dudit corps de rotor (23) est inférieure audit bord (17) dudit second récipient (13, 14).

7. Procédé selon la revendication 6, **caractérisé en ce qu'**il prévoit d'envoyer ledit flux d'air (30) à travers une ouverture de sortie inférieure dudit corps de rotor (23) directement en regard de l'ouverture supérieure dudit second récipient (13, 14) au moins partiellement remplaçable et de récupérer au moins ledit flux d'air de récupération (28) à travers une pluralité d'embouchures de récupération (25) réalisées dans ledit corps de rotor (23).

8. Procédé selon la revendication 6 ou 7, **caractérisé en ce qu'**un second flux d'air de récupération (29) est généré au moins à partir du fond (16) dudit second récipient au moins partiellement remplaçable du second type (14) et est dévié dans un second canal de récupération défini entre un bord externe (17) dudit second récipient au moins partiellement remplaçable du second type (14) et un bord dudit premier récipient fixe (21).

9. Procédé selon l'une quelconque des revendications 6 à 8, **caractérisé en ce qu'**une résistance inférieure (22) est activée ou non, selon le type de cuisson, et coopère avec le fond (16) du second récipient (13, 14) au moins partiellement remplaçable.

10. Procédé selon l'une quelconque des revendications 6 à 9, **caractérisé en ce qu'**il prévoit de détecter le type de second récipient (13, 14) au moins partiellement remplaçable au moyen de moyens de détection, et de conditionner le type de cuisson à travers lesdits moyens de détection.
